**Europäisches Patentamt**

**European Patent Office**

**Office européen des brevets**

(19)

(11) Veröffentlichungsnummer: **0 071 721**
**B1**

(12) # EUROPÄISCHE PATENTSCHRIFT

(45) Veröffentlichungstag der Patentschrift:
**19.02.86**

(51) Int. Cl.⁴: **A 01 D  34/70,** A 01 D  34/82

(21) Anmeldenummer: **82105289.1**

(22) Anmeldetag: **16.06.82**

(54) **Sichelrasenmäher mit Sammelvorrichtung.**

(30) Priorität: **05.08.81 FR 8115489**

(43) Veröffentlichungstag der Anmeldung:
**16.02.83 Patentblatt 83/7**

(45) Bekanntmachung des Hinweises auf die Patenterteilung:
**19.02.86 Patentblatt 86/8**

(84) Benannte Vertragsstaaten:
**AT BE DE NL**

(56) Entgegenhaltungen:
**AU - B - 452 098**
**CA - A - 953 114**
**DE - A - 1 812 908**
**FR - A - 1 509 683**
**FR - A - 1 553 596**
**FR - A - 2 247 152**
**GB - A - 1 429 567**
**US - A - 2 970 421**

(73) Patentinhaber: **Outils Wolf, Société à responsabilité limitée, Rue de l'Industrie, F-67160 Wissembourg (FR)**

(72) Erfinder: **Der Erfinder hat auf seine Nennung verzichtet**

(74) Vertreter: **Nuss, Pierre, 10, rue Jacques Kablé, F-67000 Strasbourg (FR)**

**Beschreibung**

Die vorliegende Erfindung bezieht sich auf die Herstellung von Rasenmähern, insbesondere mit drehenden Messern, und hat einen Sichelrasenmäher mit Sammelvorrichtung zum Gegenstand.

Die CA-A-953 114 zeigt einen Sichelrasenmäher mit Lenker und drehenden Messern, wobei der Lenker mittig angeordnet ist und mit einem Haken zum Einhängen eines Sammelbehälters versehen ist, wobei beim Abhängen und Einhängen des Behälters dem Benutzer voller Zugang von der Seite her geboten wird und wobei der Sammelbehälter mit einer Anordnung zur Verbindung mit dem Haken des Lenkers versehen ist.

Der vorliegenden Erfindung liegt die Aufgabe zugrunde, die mit diesem Rasenmäher verbundenen Nachteile zu beseitigen. Erfindungsgemäss ist ein solcher Rasenmäher dadurch gekennzeichnet, dass die Verbindungsanordnung ein Metallbügel ist und dass an einem Ansatz des mittig angeordneten Lenkers eine Schutzklappe schwenkbar angeordnet ist, die in der Arbeitsstellung durch ein Tragband gehalten wird, das am Haken des mittigen Lenkers befestigt ist.

Weitere Vorteile, Merkmale und Einzelheiten der Erfindung sind der nun folgenden Beschreibung zu entnehmen, die anhand der den Umfang des Erfindungsgedankens durchaus nicht einschränkenden schematischen Zeichnungen eine bevorzugte Ausführungsform der Erfindung veranschaulicht.

Es zeigen:

Figur 1 perspektivisch einen erfindungsgemäss verbesserten Rasenmäher;

Figur 2 perspektivisch eine Ansicht des Rasenmähers, aus der Blickrichtung eines nach unten und nach vorne hinschauenden Betrachters;

Figur 3 von hinten und perspektivisch den Rasenmäher mit der Schutzklappe in Arbeitsstellung;

Figur 4 eine perspektivische Teilansicht, wobei die Schwenkverbindung der Schutzklappe am Ansatz des Lenkers verdeutlicht wird;

Figur 5 perspektivisch einen steifen Grassammelkorb in der Offenstellung;

Figur 6 eine der Figur 5 entsprechende Ansicht bei geschlossenem Korb;

Figur 7 einen Schnitt des Teils A der Figur 6, und

Figur 8 perspektivisch einen Grassammelbeutel.

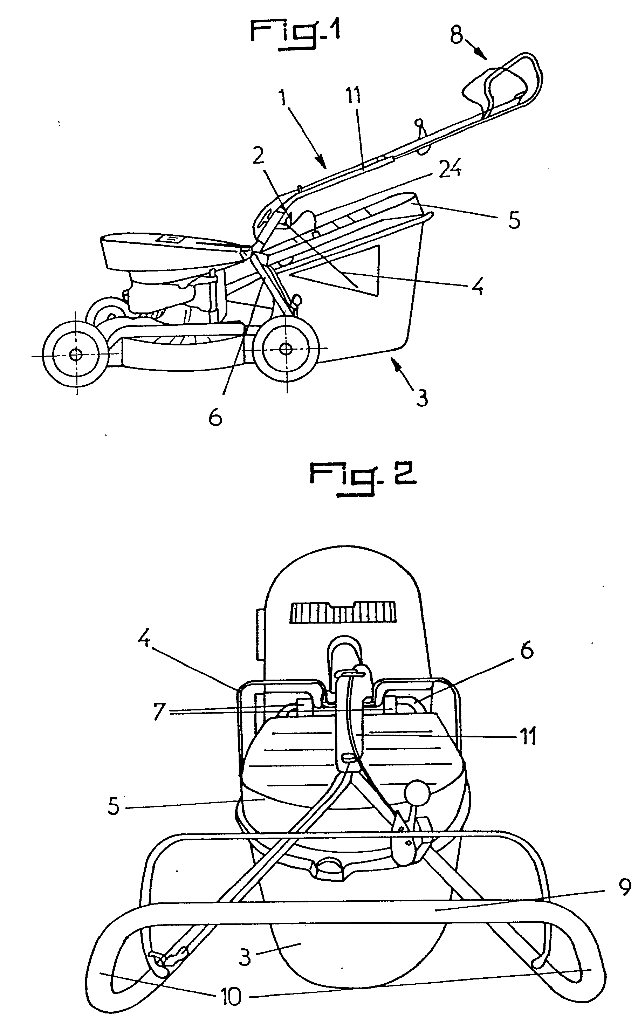

Gemäss der vorliegenden Erfindung, die insbesondere in der beiliegenden Figur 1 veranschaulicht ist, ist der neue Rasenmäher mit drehenden Sichelmessern, mit mittig angeordnetem Lenker, und mit einem Haken 2 zum Einhängen eines Sammelbehälters 3, dadurch gekennzeichnet, dass der Sammelbehälter 3 mit einem Metallbügel 4 zur Hakenverbindung mit dem Haken 2 des Lenkers 1 versehen ist und dass am Ansatz 6 des mittig angeordneten Lenkers 1 eine Schutzklappe

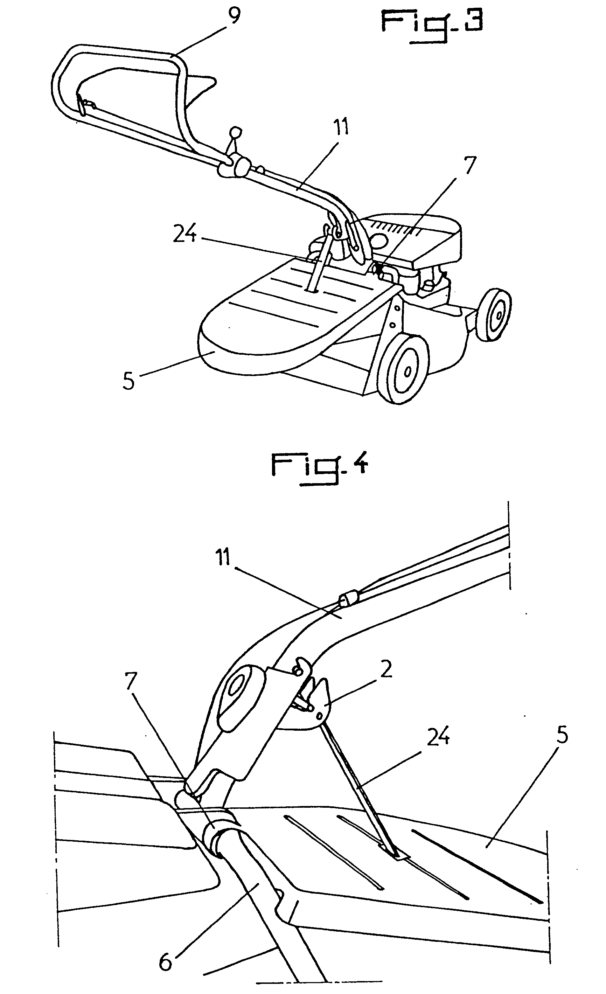

5 schwenkbar angeordnet ist, die in der Arbeitsstellung (Figuren 3 und 4) durch ein Tragband 24 gehalten wird, das am Haken 2 des mittigen Lenkers 1 befestigt ist.

Der mittig angeordnete Lenker 1 ist mit dem Mäherrahmen mittels seines Ansatzes 6 verbunden, der als Bügel ausgebildet ist und zwei zylindrische koaxiale, als Schwenkverbindung der Schutzklappe 5 dienende Teile 7 aufweist. Oben ist der Lenker 5 mit der eigentlichen Lenkstange 8 versehen, die auf ergonomisch günstige Weise eine Deltagestalt aufweist. Der Lenker 8 besteht aus einer hinteren, etwas höher gelegenen Querstange 9 und aus Seitenstegen 10, die schräg nach innen gebogen sind, und mit einem mittleren Balken 11 verbunden sind, der aus einem hohlen Einfach- oder Doppelprofil besteht, an dem der Haken 2 befestigt ist und dessen anderes Ende mit dem Ansatz 6 verbunden ist.

Die besondere Gestaltung des Lenkers 1 ermöglicht dem Benutzer freien, sehr willkommenen Zugang zum Aushaken bzw. Lösen und Anhängen des Schnittgrasbehälters 3.

Dieser Grasbehälter, der als steifer Korb (Figuren 1, 2, 5 und 6) oder als Beutel (Figur 8) ausgebildet sein kann, ist an der Auslassöffnung des Grasauswurfstutzens und am Lenker 1 mittels seines Metallbügels 4 befestigt, der mit dem Haken 2 zusammenarbeitet.

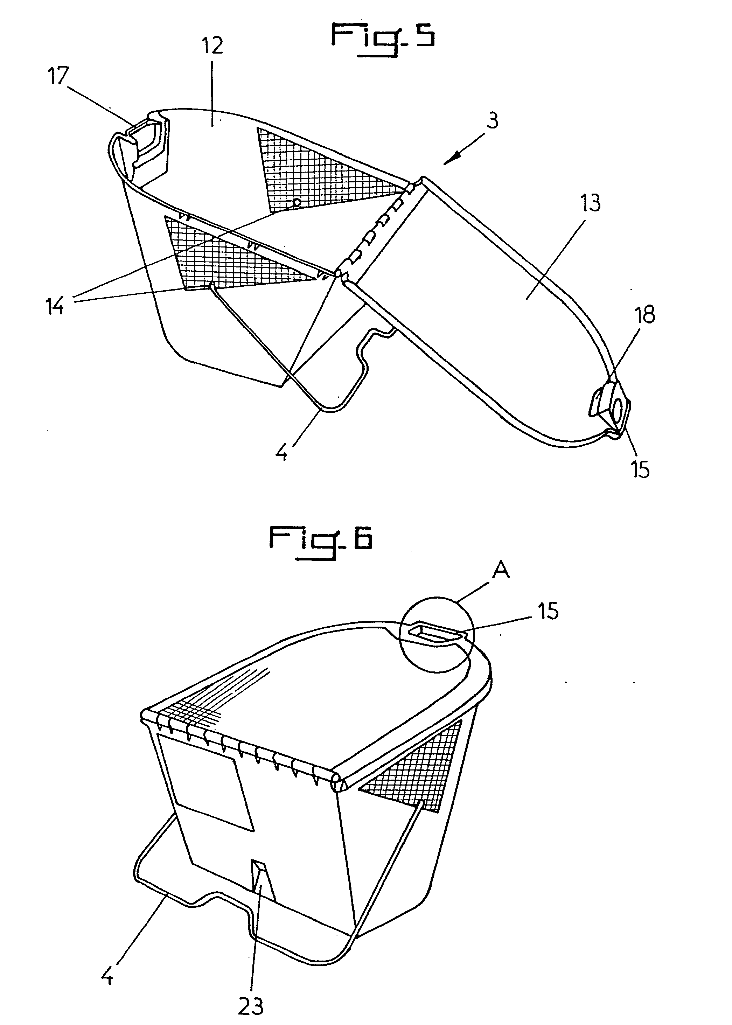

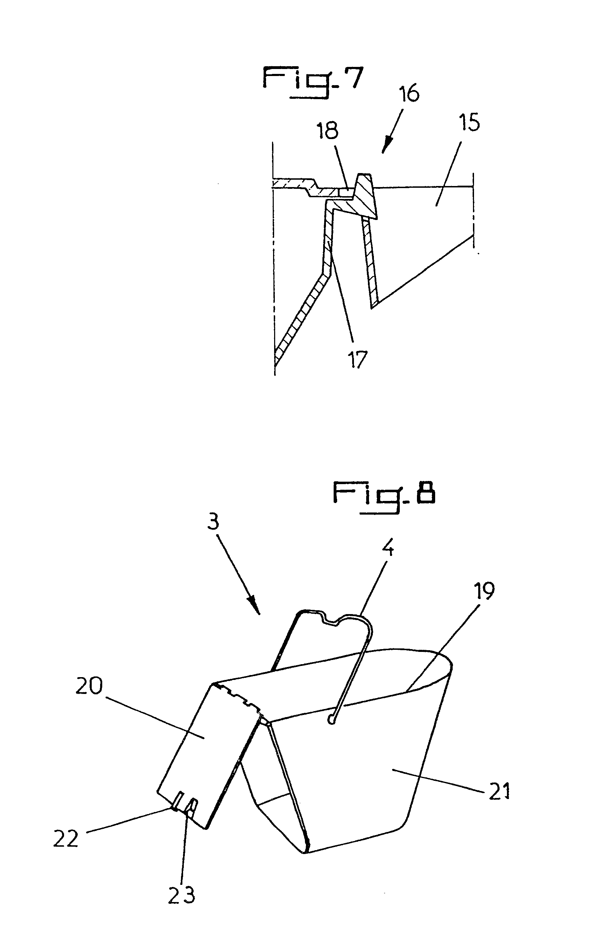

Die Figuren 5 und 6 zeigen einen erfindungsgemässen steifen Korb, der aus einem Becken 12 besteht, auf dem ein Deckel 13 angelenkt ist, wobei der Bügel 4, zur Hakenverbindung mit dem Lenker 1, bei 14 schwenkbar mit dem Becken 12 verbunden ist. An der der Schwenkverbindung zwischen dem Deckel 13 und dem Becken 12 entgegenliegenden Seite, weist der Deckel 13 einen Handgriff 15 auf, der seinerseits mit einer selbsttätigen Verriegelungseinrichtung 16 (Figur 7) ausgestattet ist, die ihrerseits aus einem Schnapper 17 besteht, der an dem Becken 12 befestigt ist und der in der Schliessstellung in eine Öffnung in einer Schliessklappe am Deckel 13 einrastet. Zum Entriegeln des Deckels 13 genügt es, mit dem Daumen gegen das Ende des Schnappers bzw. Riegels 17 zu drücken. In an sich bekannter Weise sind das Becken 12 und der Deckel 13 vorteilhaft mit Gittern versehen, so dass nur das Gras im Behälter bleibt, während die Luft entweicht.

Falls es sich bei dem Behälter zum Aufsammeln des Grases um einen Grasbeutel handelt, besteht letzterer am zweckmässigsten aus einem Metallrahmen 19, aus einer steifen Frontklappe 20, die am Stutzen des Grasauswurfkanals befestigt wird, und aus einem Gewebe 21, das die Seiten und den oberen Teil des Behälters bedeckt. Der untere Teil des Behälters wird durch eine Kunststoffplatte verstärkt.

Die Frontklappe 20 ist mit dem Metallteil 19 schwenkbar verbunden und an ihrer anderen Seite ist sie mit einem Schnappriegel 22 versehen, der weitgehend dem Schnappriegel des steifen Korbs entspricht, wobei der Bügel 4 ebenfalls schwenkbar am Metallteil 19 befestigt ist.

Gemäss einem weiteren Merkmal der Erfindung ist die Anordnung dadurch gekennzeichnet, dass an der Vorderseite des Beckens 12 des steifen Korbs und ebenfalls an der Frontklappe 20 des Grasbeutels eine Ausnehmung 23 vorhanden ist, die z.B. die Form einer Pyramide aufweist und die einen Vorsprung hineinpassender Form am Körper des Rasenmähers aufnimmt, so dass der Behälter beim Anhängen geführt bzw. zentriert wird.

Die Schutzklappe 5 ist vorteilhaft als Blasformling aus Polyäthylen hoher Dichte hergestellt und weist an der unteren Seite ein nach unten gerichtetes Profil auf mit dem Zweck, das geschnittene Gras nach unten zu richten, falls der Behälter 3 nicht zur Verwendung kommt. Die Schutzklappe 5 ist an den zylindrischen koaxialen Teilen 7 des Ansatzes 6 des Lenkers 1 schwenkbar befestigt. Das Tragband 24 wird am Haken 2 des Lenkers 1 angebracht, um die Schutzklappe 5 in der Arbeitsstellung zu halten, falls kein Behälter 3 verwendet wird.

Die Schutzklappe 5 ist so dimensioniert und so angeordnet, dass sie die ganze hintere Auswurfzone des Auslasstutzens des Mähers abdeckt. Aus diesem Grund kann man den Rasenmäher ohne Sammelbehälter und ohne Anbringung einer lösbaren Schutzklappe verwenden. Bei Verwendung eines Behälters genügt es, die Schutzklappe 5 zwischen dem Griff 4 und dem Behälter 3 zu führen, so dass das untere Profil der Schutzklappe 5 die Wirkung hat, die Luft und den Staub durch die so gebildeten Seitenöffnungen fliessen zu lassen.

## Patentansprüche

1. Sichelrasenmäher mit Lenker und drehenden Messern, wobei der Lenker (1) mittig angeordnet ist und mit einem Haken (2) zum Einhängen eines Sammelbehälters (3) versehen ist, wobei beim Abhängen und Einhängen des Behälters (3) dem Benutzer voller Zugang von der Seite her geboten wird und wobei der Sammelbehälter (3) mit einer Anordnung zur Verbindung mit dem Haken (2) des Lenkers (1) versehen ist, dadurch gekennzeichnet, dass die Verbindungsanordnung ein Metallbügel (4) ist und dass an einem Ansatz (6) des mittig angeordneten Lenkers (1) eine Schutzklappe (5) schwenkbar angeordnet ist, die in der Arbeitsstellung durch ein Tragband (24) gehalten wird, das am Haken (2) des mittigen Lenkers (1) befestigt ist.

2. Rasenmäher nach Anspruch 1, dadurch gekennzeichnet, dass der mittig angeordnete Lenker (1) mit dem Rasenmäherrahmen mittels seines Ansatzes (6) verbunden ist, der einen unteren Bügelteil bildet, der zwei zylindrische koaxiale Teile (7) aufweist, mittels deren die Schutzklappe (5) schwenkbar befestigt ist, dass der Lenker (1) an seinem oberen Teil eine Lenkstange (8) aufweist, die auf ergonomisch günstige Weise eine Deltagestalt aufweist, wobei die Lenkstange (8) aus einer etwas höher gelegenen Querstange (9)

und aus Seitenstegen (10), die schräg nach innen gerichtet und mit einem mittleren Balken (11) verbunden sind, besteht, wobei der Balken (11) aus einem hohlen Einfach- oder Doppelprofil besteht, an dem der Haken (2) befestigt ist und dessen anderes Ende mit dem Ansatz (6) verbunden ist.

3. Rasenmäher nach Anspruch 1, dadurch gekennzeichnet, dass der Sammelbehälter (3) die Form eines steifen Korbs aufweist, der als Becken (12), auf welchem ein Deckel (13) angelenkt ist, ausgebildet ist, wobei der Befestigungsbügel (4) schwenkbar (bei 14) mit dem Becken (12) verbunden ist und wobei der Deckel (13) an der der Schwenkverbindung zwischen dem Deckel (13) und dem Becken (12) entgegenliegenden Seite mit einem Griff (15) versehen ist, der mit einem automatischen Schnappschloss (16) versehen ist, das mit einem Schnapper (17), der einstückig mit dem Becken (12) ist und in die Öffnung (18) einer Schliessklappe des Deckels (13) beim Schliessen einrastet, versehen ist.

4. Rasenmäher nach Anspruch 1, dadurch gekennzeichnet, dass der Sammelbehälter als Grasbeutel ausgebildet ist, der aus einem Metallrahmen (19), aus einer steifen Frontklappe (20), die an der Auslassöffnung des Grasauswurfstutzens befestigt wird, und aus einem Gewebe (21), das die Seiten und den oberen Teil des Behälters bedeckt, besteht, wobei der untere Teil durch eine Kunststoffolie verstärkt wird, und dass die Frontklappe (20) am Metallrahmen (19) schwenkbar befestigt ist und an der entgegenliegenden Seite mit einem Schnappschloss (22) versehen ist, wobei der Bügel (4) ebenfalls schwenkbar am Metallrahmen (19) angebracht ist.

5. Rasenmäher nach einem der Ansprüche 3 und 4, dadurch gekennzeichnet, dass an der Vorderseite des Beckens (12) des steifen Korbs und an der Frontklappe (20) des Grasbeutels nahe der unteren Kante eine Ausnehmung (23) vorhanden ist, die z.B. die Form einer Pyramide aufweist, um einen Teil mit hineinpassender Form am Rahmen des Mähers aufzunehmen, wenn der Behälter in Stellung gebracht wird, und welche das Zentrieren des Behälters gewährleistet.

6. Rasenmäher nach Anspruch 1, dadurch gekennzeichnet, dass die Schutzklappe (5) vorzugsweise als Blasformling aus Polyäthylen hoher Dichte ausgebildet ist und dass er an der unteren Seite ein nach unten gerichtetes Profil aufweist, um beim Mähen ohne den Behälter (3) das geschnittene Gras nach unten gegen den Boden zu schleudern.

## Revendications

1. Tondeuse à gazon à guidon et lames de coupe tournantes, dans laquelle le guidon (1) est fixé au milieu, et est muni d'un crochet (2) d'accrochage du réceptacle de ramassage (3), le décrochage et la mise en place du réceptacle (3) permettant à l'utilisateur un accès latéral aisé, et le réceptacle de ramassage (3) étant muni d'un dispositif d'accrochage avec le crochet du guidon (1), caractérisée en ce que le dispositif d'accrochage est une anse métallique (4), et en ce que sur l'embase (6) du guidon central (1) est monté à pivotement un déflecteur (5) retenu en position de travail au moyen d'une sangle (24) fixée sur le crochet (2) du guidon central (1).

2. Tondeuse à gazon, suivant la revendication 1, caractérisée en ce que le guidon central (1) est solidaire du châssis de la tondeuse par l'intermédiaire de son embase (6), sous forme d'un arceau inférieur présentant deux parties cylindriques coaxiales (7) grâce auxquelles le déflecteur (5) est monté à articulation, en ce que le guidon (1) est pourvu à sa partie supérieure d'un guidon (8) proprement dit présentant avantageusement une forme en delta ergonomiquement favorable, ce guidon (8) étant formé par une traverse arrière relevée (9) et par des montants latéraux (10) inclinés vers l'intérieur et reliés à un manche central (11) constitué par un profil creux unique ou jumelé, sur lequel est fixé le crochet (2), et dont l'autre extrémité est reliée à l'embase (6).

3. Tondeuse à gazon, suivant la revendication 1, caractérisée en ce que le réceptacle de ramassage (3) est sous forme d'un panier rigide constitué par un bac (12) sur lequel est monté à articulation un couvercle (13), l'anse d'accrochage (4) étant montée à articulation (en 14) sur le bac (12), et le couvercle (13) étant muni, du côté opposé à l'articulation entre le couvercle (13) et le bac (12), d'une poignée (15) munie d'un dispositif de verrouillage automatique (16) constitué par un loqueteau (17) solidaire du bac (12) et s'engageant par encliquetage dans un évidement (18) en forme de gâche du couvercle (13), en position de fermeture.

4. Tondeuse à gazon, suivant la revendication 1, caractérisée en ce que le réceptacle de ramassage est sous forme d'un sac à herbe, constitué par une armature métallique (19), par un volet frontal rigide (20) de fixation sur l'orifice du canal d'éjection d'herbe, et par une enveloppe en toile (21) revêtant les faces latérales et le dessus du réceptacle, le fond étant renforcé par une feuille en matière synthétique, et en ce que le volet frontal (20) est articulé sur l'armature métallique (19), et est muni sur son côté opposé d'un dispositif de verrouillage à encliquetage (22), l'anse (4) étant également fixée à pivotement sur l'armature (19).

5. Tondeuse à gazon, suivant l'une quelconque des revendications 3 et 4, caractérisée en ce que, sur la face frontale du bac (12) du panier rigide ainsi que sur le volet frontal (20) du sac à herbe, est prévu, près de l'arrête inférieure, une cavité (23), par exemple de forme pyramidale, destinée à coiffer un bossage de forme complémentaire de la carcasse de la tondeuse, lors de la mise en place du réceptacle, et assurant le centrage de ce dernier.

6. Tondeuse à gazon, suivant la revendication 1, caractérisée en ce que le déflecteur (5) est avantageusement réalisé par soufflage en polyéthylène haute densité et présente sur sa face inférieure un profil dirigé vers le bas destiné à rabattre l'herbe coupée vers le sol en cas de non-utilisation du réceptacle (3).

## Claims

1. Lawnmower with a guide rod and rotary blades, wherein the guide rod (1) is centrally positioned and is provided with a hook (2) for hooking in a collecting container (3), wherein the user has complete access from the side during unhooking and hooking in of the container (3), and wherein the collecting container (3) is provided with an arrangement for connecting to the hook (2) of the guide rod (1), characterized in that the connection arrangement is a metal fixing bracket (4) and that a protective flap (5) is pivotably positioned on an attachment (6) of the centrally positioned guide rod (1) and is held in the working position by a strap (24), which is fixed to the hook (2) of the central guide rod (1).

2. Lawnmower according to claim 1, characterized in that the centrally positioned guide rod (1) is connected to the lawnmower frame by means of its attachment (6), which forms a lower bracket part having two cylindrical coaxial portions (7), by means of which the protective flap (5) is pivotably fixed, that the guide rod (1) is provided in its upper part with a link (8), which in ergonomically favourable manner has a delta configuration, link (8) comprising a crossbar (9) which is at a somewhat higher level and lateral members (10), which are inclined inwards and connected to a central beam (11), wherein the beam (11) comprises a hollow single or double profile to which is fixed the hock (2) and whose other end is connected to the attachment (6).

3. Lawnmower according to claim 1, characterized in that the collecting container (3) is in the form of a rigid basket, which is constructed as a receptacle (12) to which is articulated a cover (13), wherein the metal fixing bracket (4) is pivotably connected (at 14) to the receptacle (12) and wherein the cover (13) is provided on the side opposite to the pivoting connection between the cover (13) and the receptacle (12) with a grip (15), which is provided with an automatic spring catch (16), which has a latch (17), which is in one piece with the receptacle (12) and engages in the opening (18) of a closing flap of the cover (13) on closing.

4. Lawnmower according to claim 1, characterized in that the collecting container is constructed as a grass bag, which comprises a metal frame (19), a rigid front flap (20), which is fixed to the outlet of the grass ejection connection, as well as a fabric (21) which covers the sides and upper part of the container, wherein the lower part is reinforced by a plastic foil, and that the front flap (20) is pivotably fixed to the metal frame (19) and is provided on the opposite side with a spring catch (22), wherein the bracket (4) is also pivotably fitted to the metal frame (19).

5. Lawnmower according to one of the claims 3 and 4, characterized in that a recess (23) is provided on the front of the receptacle (12) of the rigid basket and on the front flap (20) of the grass bag in the vicinity of the lower edge and is e.g. shaped like a pyramid, so as to receive a portion on the mower frame which fits into it, if the container is brought into position and which ensures the centring of the container.

6. Lawnmower according to claim 1, characterized in that the protective flap (5) is preferably constructed as a blow moulding made from high density polyethylene and that it is provided on its underside with a downwardly directed profile, so that when mowing without the container (3) it throws the cut grass downwards against the ground.

Fig. 1

Fig. 2

Fig. 3

Fig. 4

Fig. 5

17 12 3

14 13

4 18

15

Fig. 6

A

15

4

23

Fig.7

Fig.8